# DEMANDE DE BREVET EUROPEEN

(11) **EP 4 807 935 A1**
(43) Date de publication de la demande: **16.09.2026**
(21) Numéro de dépôt: 26163829.0
(22) Date de dépôt: 11.03.2026
(51) Int. Cl.: H02J 3/26

(54) **PROCEDE DE GESTION DE L'EQUILIBRAGE DES CHARGES D'UN RESEAU ELECTRIQUE POLYPHASE, DISPOSITIF DE GESTION ET PROGRAMME D'ORDINATEUR CORRESPONDANT**

(30) Priorité: 14.03.2025 FR 2502585
(71) Demandeur: SAGEMCOM ENERGY & TELECOM SAS, 92270 Bois-Colombes (FR)
(72) Inventeur: TEBOULLE, Henri, 92270 BOIS-COLOMBES (FR); GRINCOURT, Christophe, 92270 BOIS-COLOMBES (FR)
(74) Mandataire: Cabinet Le Guen Maillet

(57) **Abrégé**

Il est proposé ici un procédé et un dispositif de gestion de l'équilibrage des charges d'un réseau électrique comprenant une pluralité de phases. Le procédé est implémenté dans un dispositif de gestion et comprend : obtenir (E301, E302), pour des points de raccordement, des premières données représentatives d'au moins une phase à laquelle sont connectés les points de raccordement, et des deuxièmes données représentatives d'une consommation d'énergie électrique sur une période prédéterminée pour ladite au moins une phase, puis déterminer (E302), en fonction des premières et deuxièmes données, une consommation d'énergie électrique totale prévue sur une période prédéterminée pour chaque phase de ladite pluralité de phases, et détecter (E305) un déséquilibre de charge entre lesdites phases à partir de ladite consommation d'énergie électrique totale prévue, et lorsqu'un déséquilibre de charge est détecté, alors exécuter (E306, E307) une modification de raccordement de phase.

## Description

### DOMAINE TECHNIQUE

La présente divulgation concerne la gestion des réseaux de distribution d'électricité polyphasés. Plus particulièrement, la présente divulgation concerne la gestion de l'équilibrage des charges de tels réseaux de distribution d'électricité polyphasés.

### ETAT DE LA TECHNIQUE ANTERIEURE

Les réseaux de distribution d'électricité (aussi appelés par la suite « réseaux électriques » ou « réseaux électriques polyphasés ») sont principalement polyphasés. Plus particulièrement, les réseaux de distribution d'électricité sont en général triphasés. Dans ce cas, l'électricité est distribuée *via* trois conducteurs de phase distincts (aussi appelés simplement « phases » par la suite). Cela permet une utilisation plus efficace de l'énergie en répartissant la charge sur plusieurs conducteurs de phase.

Le terme « charge » fait référence à la quantité d'électricité demandée par les utilisateurs (aussi appelés par la suite « abonnés ») à un instant donné. Elle est directement liée à la phase du réseau de distribution d'électricité polyphasé car la charge peut être répartie sur l'ensemble des phases ou concentrée sur une seule phase. Une distribution équilibrée de la charge entre les phases permet d'optimiser le fonctionnement du réseau de distribution d'électricité et de prévenir les surcharges sur une phase spécifique. Ainsi, l'équilibrage des charges entre les différentes phases est essentiel pour les fournisseurs d'électricité.

Lors de l'installation d'un abonné, la phase du réseau sur laquelle il est connecté est choisie de manière définitive. Cependant, la consommation peut varier d'un abonné à l'autre et fluctuer dans le temps. Un abonné peut ajouter des appareils à forte consommation (e.g., piscine, jacuzzi, voiture électrique, etc.). Il peut aussi installer des générateurs d'électricité (e.g., panneaux solaires, éoliennes, etc.). Ces ajouts créent un déséquilibre des charges qui ne peut pas être facilement compensé.

Un déséquilibre de charge peut provoquer des fluctuations de tension. Cela perturbe la stabilité du réseau de distribution et peut causer des pannes. Un déséquilibre entraîne également une surchauffe des équipements, surtout des moteurs triphasés. La surchauffe peut dégrader l'isolation des câbles et des équipements. Cela augmente le risque de courts-circuits et de défaillances. En outre, un déséquilibre des charges réduit l'efficacité énergétique et peut endommager les équipements. Dans les systèmes à grande échelle, un déséquilibre persistant peut provoquer des pannes électriques.

L'état actuel de la technique ne propose pas de solutions satisfaisantes pour résoudre ce problème. Il n'existe pas à l'heure actuelle de solution efficace permettant d'équilibrer correctement la distribution de l'énergie entre les phases d'un réseau de distribution d'électricité.

La situation peut donc être améliorée. Il est notamment souhaitable de fournir une solution permettant de répartir de manière optimisée la charge entre les différentes phases du réseau de distribution, assurant ainsi une utilisation plus équilibrée de l'énergie, une réduction des risques de surcharge et une amélioration de la performance énergétique globale du réseau de distribution.

### EXPOSE DE L'INVENTION

Il est proposé ici un procédé de gestion de l'équilibrage des charges d'un réseau électrique comprenant une pluralité de phases alimentant en énergie électrique un ensemble de points de raccordement adaptés pour raccorder une installation électrique d'un abonné audit réseau électrique. Le procédé est implémenté dans un dispositif de gestion et comprend :
- obtenir, pour chaque point de raccordement, des premières données représentatives d'au moins une phase parmi ladite pluralité de phases à laquelle est connecté chaque point de raccordement,
- obtenir, pour chaque point de raccordement, des deuxième données représentatives d'une consommation d'énergie électrique sur une période prédéterminée pour ladite au moins une phase à laquelle ledit point de raccordement est connecté,
- estimer, en fonction des premières données et d'une consommation moyenne déterminée sur la base desdites deuxièmes données, une consommation d'énergie électrique totale prévue sur une période prédéterminée pour chaque phase de ladite pluralité de phases,
- détecter un déséquilibre de charge entre lesdites phases à partir de ladite consommation d'énergie électrique totale prévue,
- et lorsqu'un déséquilibre de charge est détecté, alors commander une modification de raccordement de phase, ladite modification de raccordement de phase comprenant :
- classer par ordre décroissant de consommation d'énergie électrique totale prévue sur la période prédéterminée, lesdites phases de ladite pluralité de phases, une première phase étant une phase ayant une consommation d'énergie électrique totale prévue la plus élevée, une deuxième phase étant une phase ayant une consommation d'énergie électrique totale prévue intermédiaire, une troisième phase étant une phase ayant une consommation d'énergie électrique totale prévue la plus faible ;
- pour ladite première phase, sélectionner, un premier ensemble de points de raccordement sélectionnés parmi un groupe de points de raccordement alimentés par ladite première phase, jusqu'à ce qu'une consommation d'énergie électrique totale prévue sur la période prédéterminée des points de raccordement atteigne un premier gain de consommation prédéterminé.

De manière avantageuse, le procédé selon l'invention permet de détecter en temps réel un déséquilibre de charge entre les phases d'un réseau électrique polyphasé. Grâce à l'analyse de la consommation d'énergie électrique de chaque point de raccordement alimenté par les phases du réseau électrique, il est possible de déterminer pour chaque phase quelle est sa consommation d'énergie électrique totale et ainsi en déduire s'il existe un déséquilibre de charge. En cas de détection d'un déséquilibre de charge, le procédé selon l'invention permet alors de commander automatiquement et en temps réel la phase (ou l'ordre des phases) auquel chaque point de raccordement est relié afin de rééquilibrer les charges de chaque phase.

Selon un mode de réalisation, détecter un déséquilibre de charge entre lesdites phases comprend : déterminer, à partir de ladite consommation d'énergie électrique totale prévue de chaque phase, les phases ayant une consommation d'énergie électrique totale prévue sur la période prédéterminée la plus élevée, respectivement la plus faible, et si une différence de consommation d'énergie électrique totale prévue entre les phases ayant une consommation d'énergie électrique totale prévue la plus élevée et la plus faible est supérieure à un seuil prédéterminé, alors ledit déséquilibre de charge est détecté.

Selon un mode de réalisation particulier, sélectionner, pour ladite première phase, ledit premier ensemble de points de raccordement est effectué dans un ordre décroissant de consommation moyenne d'énergie électrique prévue sur la période prédéterminée, et commander ladite modification de raccordement de phase comprend en outre :
- si une consommation d'énergie électrique totale prévue de ladite deuxième phase est supérieure à un seuil prédéterminé, alors :
- commander un basculement des points de raccordement dudit premier ensemble sélectionné sur un raccordement à ladite troisième phase, et
- sélectionner, dans un ordre décroissant d'une consommation moyenne d'énergie électrique prévue sur la période prédéterminée, un deuxième ensemble de points de raccordement sélectionnés parmi un groupe de points de raccordement alimentés par ladite deuxième phase, jusqu'à ce qu'une consommation d'énergie électrique totale prévue sur la période prédéterminée des points de raccordement atteignent un deuxième gain de consommation prédéterminé, et commander un basculement des points de raccordement dudit deuxième ensemble sélectionné sur un raccordement à ladite troisième phase.

Selon un mode de réalisation particulier, commander ladite modification de raccordement de phase comprend en outre :
- lorsque la consommation d'énergie électrique totale prévue de ladite deuxième phase est inférieure ou égale au seuil prédéterminé, alors,
- sélectionner, dans un ordre décroissant d'une consommation moyenne d'énergie électrique prévue sur la période prédéterminée, un troisième ensemble de points de raccordement sélectionnés parmi les points de raccordement dudit premier ensemble, jusqu'à ce qu'une consommation d'énergie électrique totale prévue sur la période prédéterminée des points de raccordement atteignent un troisième gain de consommation prédéterminé, et commander un basculement des points de raccordement dudit troisième ensemble sur un raccordement à ladite troisième phase, et
- sélectionner, dans un ordre décroissant d'une consommation moyenne d'énergie électrique prévue sur la période prédéterminée, les points de raccordement restants dudit premier ensemble et commander un basculement des points de raccordement restants dudit premier ensemble sur un raccordement à ladite deuxième phase.

Selon un mode de réalisation particulier, sélectionner, pour ladite première phase, ledit premier ensemble de points de raccordement est effectué aléatoirement, et commander ladite modification de raccordement de phase comprend en outre :
- si une consommation d'énergie électrique totale prévue de ladite deuxième phase est supérieure à un seuil prédéterminé, alors :
- commander un basculement des points de raccordement dudit premier ensemble sélectionnés sur un raccordement à ladite troisième phase, et
- sélectionner, aléatoirement, un deuxième ensemble de points de raccordement sélectionnés parmi un groupe de points de raccordement alimentés par ladite deuxième phase, jusqu'à ce qu'une consommation d'énergie électrique totale prévue sur la période prédéterminée des points de raccordement atteigne un deuxième gain de consommation prédéterminé, et commander un basculement des points de raccordement dudit deuxième ensemble sélectionné sur un raccordement à ladite troisième phase.

Selon un mode de réalisation particulier, commander ladite modification de raccordement de phase comprend en outre :
- lorsque la consommation d'énergie électrique totale prévue de ladite deuxième phase est inférieure ou égale au seuil prédéterminé, alors,
- sélectionner, aléatoirement, un troisième ensemble de points de raccordement sélectionnés parmi ledit premier ensemble jusqu'à ce qu'une consommation d'énergie électrique totale prévue sur la période prédéterminée des points de raccordement atteigne un troisième gain de consommation prédéterminé, et commander un basculement des points de raccordement dudit troisième ensemble sur un raccordement à ladite troisième phase, et
- sélectionner les points de raccordement restants dudit premier ensemble et commander un basculement des points de raccordement restants dudit premier ensemble sur un raccordement à ladite deuxième phase.

Il est également proposé ici un dispositif de gestion de l'équilibrage des charges d'un réseau électrique comprenant une pluralité de phases alimentant en énergie électrique un ensemble de points de raccordement adaptés pour raccorder une installation électrique d'un abonné audit réseau électrique. Le dispositif de gestion comprend de la circuiterie électronique configurée pour :
- obtenir, pour chaque point de raccordement, des premières données représentatives d'au moins une phase parmi ladite pluralité de phases à laquelle est connecté chaque point de raccordement,
- obtenir, pour chaque point de raccordement, des deuxième données représentatives d'une consommation d'énergie électrique sur une période prédéterminée pour ladite au moins une phase à laquelle ledit point de raccordement est connecté,
- estimer, en fonction des premières données et d'une consommation moyenne déterminée sur la base desdites deuxièmes données, une consommation d'énergie électrique totale prévue sur une période prédéterminée pour chaque phase de ladite pluralité de phases,
- détecter un déséquilibre de charge entre lesdites phases à partir de ladite consommation d'énergie électrique totale prévue,
- et lorsqu'un déséquilibre de charge est détecté, alors commander une modification de raccordement de phase, ladite modification de raccordement de phase comprenant :
- classer par ordre décroissant de consommation d'énergie électrique totale prévue sur la période prédéterminée, lesdites phases de ladite pluralité de phases, une première phase étant une phase ayant une consommation d'énergie électrique totale prévue la plus élevée, une deuxième phase étant une phase ayant une consommation d'énergie électrique totale prévue intermédiaire, une troisième phase étant une phase ayant une consommation d'énergie électrique totale prévue la plus faible ;
- pour ladite première phase, sélectionner, un premier ensemble de points de raccordement sélectionnés parmi un groupe de points de raccordement alimentés par ladite première phase, jusqu'à ce qu'une consommation d'énergie électrique totale prévue sur la période prédéterminée des points de raccordement atteigne un premier gain de consommation prédéterminé.

Selon un mode de réalisation, le dispositif de gestion est intégré à un système d'information d'un fournisseur d'électricité.

Selon un mode de réalisation particulier, le dispositif de gestion est intégré dans un concentrateur de données.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont lues et exécutées par le processeur.

Il est aussi proposé un support de stockage, stockant de telles instructions entraînant l'exécution, par le processeur, du procédé évoqué ci-dessus selon l'un quelconque de ses modes de réalisation, lorsque lesdites instructions sont lues depuis le support de stockage et exécutées par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
**[****Fig. 1A****]** et **[****Fig. 1B****]** illustrent schématiquement des exemples d'environnement de mise en œuvre du procédé de gestion de l'équilibrage des charges d'un réseau électrique polyphasé, selon des modes de réalisation ;
[Fig. 2] illustre schématiquement un exemple de plateforme matérielle permettant d'implémenter, sous forme de circuiterie électronique, un dispositif de gestion de l'équilibrage des charges d'un réseau électrique polyphasé, selon un mode de réalisation ;
**[****Fig.3****]** illustre schématiquement les étapes du procédé de gestion de l'équilibrage des charges d'un réseau électrique polyphasé, selon un mode de réalisation.
**[****Fig.4****]** illustre schématiquement certaines étapes du procédé de gestion de l'équilibrage des charges d'un réseau électrique polyphasé, selon un mode de réalisation.
**[****Fig.5****]** illustre schématiquement certaines étapes du procédé de gestion de l'équilibrage des charges d'un réseau électrique polyphasé, selon un autre mode de réalisation ;
[Fig. 6A], [Fig. 6B] et [Fig. 6C] illustrent sous forme de diagramme de flux des exemples des flux de communication au cours du procédé de gestion de l'équilibrage des charges d'un réseau électrique polyphasé, selon des modes de réalisation.

### EXPOSE DETAILLE DE MODES DE REALISATION

Le principe général de la présente divulgation consiste à modifier, à tout moment, en fonction de la charge de chacune des phases du réseau électrique, la (ou les) phase(s) à laquelle (auxquelles) est (sont) connectée(s) initialement un point de raccordement monophasé ou polyphasé d'une installation électrique d'un abonné. Plus particulièrement, la présente divulgation concerne un procédé permettant de basculer d'une connexion à une (ou des) phase(s) à laquelle (auxquelles) le point de raccordement est initialement connecté vers une connexion à une (ou des) nouvelle(s) phase(s), en fonction de la charge de chacune des phases du réseau électrique.

En effet, comme évoqué précédemment, le choix de la phase du réseau électrique à laquelle le point de raccordement de l'abonné est connecté est réalisé de manière définitive, lors du raccordement de l'installation électrique de l'abonné au réseau électrique. Il n'est donc pas possible d'équilibrer les charges du réseau électrique en modifiant le choix de la phase à laquelle est connecté le point de raccordement de l'installation électrique de l'abonné.

Le terme « point de raccordement monophasé ou polyphasé » (aussi appelé « point de raccordement ») fait référence ici à un point de connexion de l'installation électrique de l'abonné qui est connecté à une ou plusieurs phases dites « d'entrée » du réseau de distribution d'électricité. Ce point de raccordement est soit monophasé (i.e., une seule phase « sortante » alimente l'installation électrique de l'abonné), soit polyphasé (i.e., plusieurs phases « sortantes » alimentent l'installation électrique de l'abonné). Par la suite, les termes « phase d'entrée » font référence à une phase du réseau électrique arrivant au point de raccordement, et les termes « phase de sortie » font référence à la phase partant du point de raccordement et fournissant l'électricité à l'installation de l'abonné.

Ainsi, le point de raccordement constitue une interface entre l'installation électrique de l'abonné et le réseau électrique alimentant en électricité l'installation domestique ou industrielle d'un abonné. En général, ce point de raccordement est équipé d'un compteur électrique, permettant la mesure de l'électricité fournie à l'abonné.

L'objectif est donc de pouvoir changer la ou les phases du réseau électrique à laquelle, ou auxquelles, est (sont) initialement connectée(s) la ou les phases de sortie du point de raccordement de l'installation électrique de l'abonné, en fonction de la charge de chaque phase du réseau électrique, afin de pouvoir optimiser l'équilibrage des charges des phases du réseau électrique lorsque cela est nécessaire.

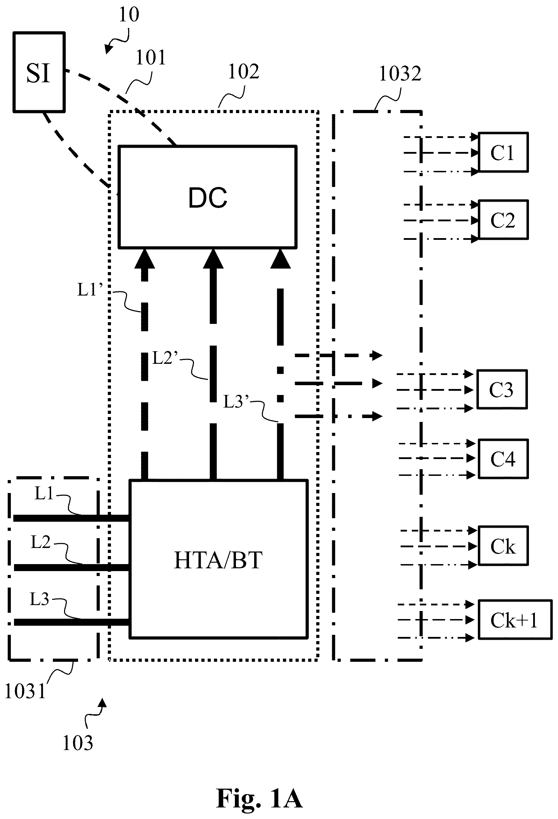

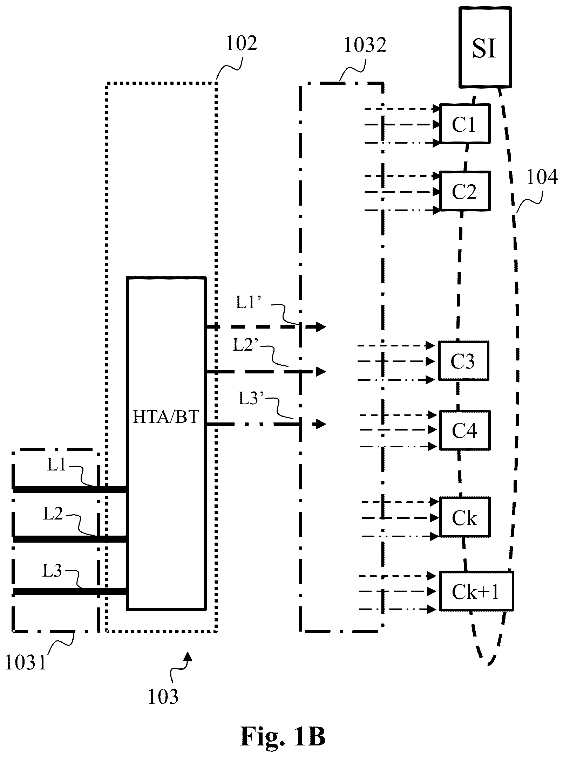

Les Fig. 1A et Fig. 1B illustrent ainsi schématiquement des exemples d'environnement de mise en œuvre du procédé de gestion de l'équilibrage des charges d'un réseau électrique polyphasé, selon des modes de réalisation.

Dans ces exemples, non limitatifs, un réseau d'acheminement d'électricité achemine l'électricité des centrales de production vers les utilisateurs finaux (ou abonnés), comme les foyers ou les entreprises. Un tel réseau d'acheminement d'électrique comprend notamment un réseau de transport (qui transporte l'électricité sur de longues distances à haute tension) et un réseau de distribution 103 (qui amène l'électricité à des niveaux de tension plus faibles pour la consommer dans les foyers ou les entreprises). Le réseau de distribution d'électricité 103 comprend deux types de réseaux : un réseau moyenne tension 1031 comprenant des lignes moyenne tension (tension comprise entre 15 kV et 30 kV) et un réseau basse tension 1032 comprenant des lignes basse tension (tension de 230V ou 400V). Un transformateur HTA/BT (ou poste de transformation HTA/BT) compris dans un sous-répartiteur 102 assure la liaison entre les lignes moyenne tension et les lignes basse tension. En particulier, le transformateur HTA/BT abaisse les moyennes tensions à une tension plus faible (220 V à 400 V) pour la rendre compatible avec l'utilisation domestique et industrielle. Ainsi, les lignes basse tension du réseau basse tension 1032 servent à alimenter en électricité les installations électriques des abonnés depuis le transformateur HTA/BT vers les foyers et entreprises.

Comme évoqué ci-dessus, le réseau de distribution d'électricité 103 est en général polyphasé afin de garantir une répartition équilibrée et efficace de l'énergie électrique. Plus particulièrement, les réseaux électriques haute tension 1031 et basse tension 1032 sont composés, en général, de trois conducteurs de phases distincts L1, L2, L3, respectivement L1', L2', L3' (aussi appelés par la suite « phase ») et, le cas échéant, d'un conducteur de phase neutre (aussi appelé par la suite « neutre »). Le réseau électrique 103 est alors dit « triphasé ». Il est à noter que d'autres types de réseau électrique polyphasé existent, tels que des réseaux électriques comprenant uniquement deux conducteurs de phase (réseau électrique dit « biphasé »).

Il est à noter que par la suite, le réseau électrique considéré est le réseau électrique triphasé basse tension 1032 et les phases d'entrée sont les phases notées L1', L2', L3' partant du transformateur HTA/BT du sous-répartiteur 102.

Le réseau électrique 1032 achemine l'électricité jusqu'au point de raccordement (monophasé ou polyphasé) de l'abonné dans son foyer ou son entreprise, où un compteur électrique mesure la consommation d'énergie électrique. Ces compteurs électriques sont parfois équipés d'interfaces de communication permettant la collecte à distance des données de consommation (e.g., compteurs électriques intelligents). Par exemple, les compteurs électriques peuvent intégrer une interface de communication leur permettant de communiquer *via* un réseau de type Courants Porteurs en Ligne (ou CPL), facilitant la transmission des données, à intervalles réguliers ou selon des besoins spécifiques, vers un système d'information (*« Information System* » en anglais) d'un fournisseur d'électricité ou un concentrateur de données, pour leur traitement centralisé. En effet, les systèmes d'information ou les concentrateurs de données (« *Data Concentrator* » en anglais), collectent et centralisent les données de consommation provenant de différents compteurs électriques équipant différents points de raccordement. Les concentrateurs de données répartissent la charge de collecte et agissent comme relais entre les compteurs électriques et les systèmes d'information. Ils jouent un rôle crucial dans la gestion de l'énergie, permettant un suivi en temps réel des consommations et la détection rapide d'éventuelles anomalies ou déséquilibres. Les données collectées sont ensuite transmises au fournisseur d'électricité et traitées pour une gestion optimale de l'ensemble du réseau électrique, facilitant ainsi la maintenance et l'optimisation de ce réseau.

Selon un mode de réalisation (voir par exemple Fig. 1A), un système de gestion 10 de compteurs électriques comporte au moins un système d'information SI et au moins un concentrateur de données DC. Le système d'information SI et le concentrateur de données DC sont configurés pour communiquer ensemble *via* un premier réseau de communication 101. Par exemple, le premier réseau de communication 101 est un réseau de communication cellulaire conforme aux spécifications 2G à 5G, LTE-M, ou NB-IoT (« *Narrow Band Internet-of-Things* » en anglais ou « réseau à bande étroite de internet des objets »). Le ou les concentrateurs de données DC sont configurés pour communiquer, en outre, avec un ensemble de compteurs électriques C1 à Ck+1, *via* un deuxième réseau de communication (non représenté sur la Fig. 1A). Le deuxième réseau de communication est, par exemple, un réseau CPL conforme aux spécifications G3-PLC ou PRIME, ou G3-Hybrid ou PRIME-Hybrid.

Par ailleurs, il est à noter que, dans l'exemple de la Fig. 1A, le concentrateur de données DC est connecté aux phases d'entrée L1', L2', L3' partant du transformateur HTA/BT.

Selon un autre mode de réalisation (voir par exemple Fig. 1B), le système de gestion 10 comprend uniquement au moins un système d'information SI. Le système d'information SI et les compteurs C1 à Ck+1 sont configurés pour communiquer ensemble directement *via* un réseau de communication 104, par exemple conforme aux spécifications 2G à 5G, LTE-M, ou NB-IoT.

Dans les exemples décrits ci-dessus, les compteurs électriques C1 à Ck+1 équipent un point de raccordement chez un abonné et sont configurés pour mesurer une consommation, par cet abonné, d'une ressource en électricité qui est distribuée depuis le point de raccordement vers des équipements *via* une installation électrique. Les compteurs électriques C1 à Ck+1 sont en outre configurés pour transmettre au système d'information SI directement (Fig. 1B) ou, le cas échéant, *via* le concentrateur de données DC (Fig. 1A), des données de consommation représentatives de la consommation de l'abonné sur une période prédéterminée. Par exemple les compteurs électriques C1 à Ck+1 transmettent tous les jours des données de consommation journalière.

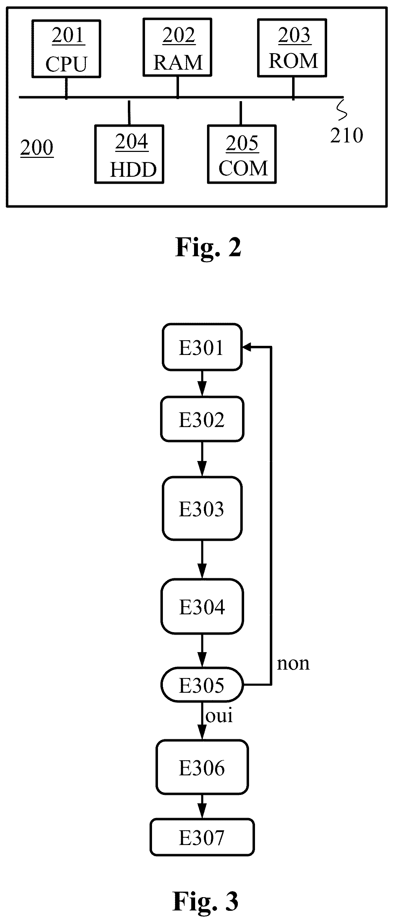

La Fig. 2 illustre schématiquement un exemple de plateforme matérielle permettant d'implémenter, sous forme de circuiterie électronique, le dispositif de gestion de l'équilibrage (ou dispositif de gestion 200) des charges d'un réseau électrique polyphasé 1032, selon un mode de réalisation.

La plateforme matérielle comporte, reliés par un bus de communication 210, un processeur ou CPU (« *Central Processing Unit* » en anglais) 201 ; une mémoire vive RAM (« *Random-Access Memory* » en anglais) 202 ; une mémoire morte 203, par exemple de type ROM (« *Read Only Memory* » en anglais) ou EEPROM (« *Electrically-Erasable Programmable ROM* » en anglais), telle qu'une mémoire Flash ; une unité de stockage, telle qu'un disque dur HDD (« *Hard Disk Drive* » en anglais) 204, ou un lecteur de support de stockage, tel qu'un lecteur de cartes SD (« *Secure Digital* » en anglais) ; et au moins un module de communication COM 205.

Le module de communication COM 205 est configuré pour permettre au dispositif de gestion de l'équilibrage 200 d'interagir avec le système d'information SI, le concentrateur de données DC ou les compteurs électriques C1 à Ck+1.

Le processeur 201 est capable d'exécuter des instructions qui forment un programme d'ordinateur et qui sont chargées dans la mémoire vive 202 à partir de la mémoire morte 203, d'une mémoire externe, d'un support de stockage (tel qu'une carte SD), ou d'un réseau de communication. Lorsque la plateforme matérielle est mise sous tension, le processeur 201 est capable de lire de la mémoire vive 202 les instructions précitées et de les exécuter. Quand elles sont lues depuis la mémoire vive 202 ou un support de stockage et exécutées par le processeur 201, ces instructions (qui forment un programme d'ordinateur) entraînent l'exécution, par le processeur 201, de tout ou partie des étapes ou procédés ou plus largement des séquences de fonctionnement décrites dans la présente divulgation.

Tout ou partie des étapes, procédés et fonctionnements décrits ici peut ainsi être implémenté sous forme logicielle par exécution d'un ensemble d'instructions par une machine programmable, par exemple un processeur de type DSP (« *Digital Signal Processor* » en anglais) ou un microcontrôleur, ou être implémenté sous forme matérielle par une machine ou un composant électronique (« *chip »* en anglais) dédié ou un ensemble de composants électroniques (« *chipset* » en anglais) dédié, par exemple un composant FPGA (« *Field Programmable Gate Array »* en anglais) ou ASIC (« *Application Specific Integrated Circuit* » en anglais). D'une manière générale, le dispositif de gestion de l'équilibrage 200 comporte de la circuiterie électronique adaptée et configurée pour implémenter tout ou partie des fonctionnements, procédés et étapes décrits ci-après.

Il est à noter que le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

La Fig. 3 illustre schématiquement les étapes du procédé d'équilibrage des charges d'un réseau électrique polyphasé, selon un mode de réalisation. Tout ou partie du procédé d'équilibrage est mis en œuvre (ou implémenté) dans le dispositif de gestion 200 tel que décrit précédemment.

Au cours d'une étape E301, pour chaque point de raccordement alimenté en électricité par la ou les phases d'entrée L1', L2', L3' d'un sous-répartiteur considéré (e.g., sous-répartiteur 102), des données dites « données topologiques du réseau électrique 1032 », sont obtenues par le dispositif de gestion 200.

Ces données topologiques du réseau électrique 1032 correspondent à des informations décrivant la structure et les connexions entre les différents éléments du réseau, tels que les transformateurs, les lignes de distribution, les sous-répartiteurs et les compteurs électriques. Elles incluent l'agencement géographique et fonctionnel de ces éléments, les relations de hiérarchie et d'alimentation entre les composants du réseau, ainsi que les points de mesure de la consommation et de la qualité de l'électricité. Ces données topologiques sont, par exemple, fournies au dispositif de gestion 200 par le système d'information SI.

Selon un mode de réalisation, les données topologiques comprennent en outre des premières données dites « données de configuration de phase ». Ces données de configuration de phase correspondent à des informations décrivant la corrélation, pour chaque point de raccordement, entre la (ou les) phase(s) d'entrée L1', L2', L3' à laquelle, (ou auxquelles), sont raccordées initialement une ou des phases de sortie du point de raccordement monophasé ou polyphasé de l'abonné, et les phases d'entrée L1', L2', L3' partant du sous-répartiteur 102 correspondant. Autrement dit, les données de configuration sont représentatives de la (ou des) phase(s) à laquelle (auxquelles) est (sont) connecté (i.e., alimenté en électricité) le point de raccordement de l'abonné à un instant t. Par exemple, ces données de configuration de phase permettent d'identifier la phase d'entrée L1', L2', L3' partant du sous-répartiteur 102 à laquelle une phase de sortie du point de raccordement de l'abonné est connectée initialement (cas d'un point de raccordement monophasé). Ces données de configuration de phase sont, par exemple, fournies au dispositif de gestion 200 par le système d'information SI.

Puis, au cours d'une étape E302, le dispositif de gestion 200 obtient, pour chaque point de raccordement alimenté en électricité par la ou les phases d'entrée L1', L2', L3' du sous-répartiteur 102 considéré et pour une période prédéterminée, des deuxièmes données dites « données de consommation d'énergie électrique » (e.g., sous la forme de courbes de charges ou de tables). Pour cela, le dispositif de gestion 200 interroge chaque compteur électrique C1 à Ck+1 équipant les points de raccordement considérés et obtient, pour la période prédéterminée considérée, ces données de consommation d'énergie électrique.

Grâce aux données de configuration de phase et aux données de consommation d'énergie électrique de chaque point de raccordement, le dispositif de gestion 200 détermine alors la consommation moyenne totale (en kWh) pour chaque phase d'entrée L1', L2', L3' connectée à un groupe de point de raccordement prédéterminé, au cours de la période prédéterminée.

Puis, au cours d'une étape E303, le dispositif de gestion 200 estime, à partir de la consommation moyenne totale de chaque phase d'entrée L1', L2', L3' une consommation prévisionnelle moyenne (en kWh) sur une période prédéterminée, pour chaque phase d'entrée L1', L2', L3' alimentant en énergie électrique un groupe de points de raccordement prédéterminé.

Ensuite, au cours d'une étape E304, le dispositif de gestion 200 estime, pour chaque phase d'entrée L1', L2', L3' partant d'un sous-répartiteur 102 considéré, la part de consommation prévue pour chaque phase d'entrée L1', L2', L3' en pourcentage par rapport à une consommation globale prévisionnelle de l'ensemble des phases d'entrée L1', L2', L3' sur une période prédéterminée. Idéalement, dans un réseau électrique triphasé, la répartition moyenne de la consommation électrique est de 33,33% de la consommation globale pour chaque phase d'entrée L1', L2', L3' partant d'un sous-répartiteur 102 considéré. Par exemple, le dispositif de gestion 200 estime que la part de consommation globale prévisionnelle sur une période prédéterminée de la première phase d'entrée L1' est de 10%, celle de la deuxième phase d'entrée L2' est de 50% et celle de la troisième phase L3' est de 40% (le total des parts de consommation globale des phases d'entrée L1', L2', L3' étant de 100%).

Un déséquilibre de charge sur le réseau électrique 1032 peut être détecté sur une période prédéterminée.

Pour cela, selon un mode de réalisation, au cours d'une étape E305, le dispositif de gestion 200 détermine ensuite quelles sont les phases d'entrée parmi l'ensemble des phases d'entrée L1', L2', L3' ayant la part de consommation globale prévisionnelle la plus élevée (notée Max(L1', L2', L3')), respectivement la plus faible (notée Min(L1', L2', L3')). Si la différence entre la valeur de la part de consommation globale prévisionnelle maximale et la valeur de la part de consommation globale prévisionnelle minimale est supérieure à un seuil prédéterminé (e.g. 10%) (réponse « oui » à l'issue de l'étape E305), alors il y a un déséquilibre de charge entre la phase d'entrée dont la part de consommation est la plus élevée et la phase d'entrée dont la part de consommation est la plus faible.

Selon un autre mode de réalisation, le dispositif de gestion 200 détecte un déséquilibre de charge lorsque le « déséquilibre de tension » ou « *voltage unbalance* » en anglais est supérieur à un seuil prédéterminé. En particulier, si « Voltage unbalance » est supérieur à un seuil prédéterminé (e.g., 8%) sur un point de raccordement en bout de chaîne de distribution, alors il y a un déséquilibre de charge. Le « voltage unbalance » est déterminé selon la formule ci-après : $Voltage unbalance = \sqrt{\frac{6 ∗ \left({U}_{12}^{2}+{U}_{23}^{2}+{U}_{31}^{2}\right)}{{\left({U}_{12}+{U}_{23}+{U}_{31}\right)}^{2}} - 2}$ avec Uij les tensions composées efficaces mesurées par un compteur équipant un point de raccordement.

Si un déséquilibre de charge est détecté (réponse « oui » à l'issue de l'étape E305), le dispositif de gestion 200 passe à l'étape E306, sinon (réponse « non » à l'issue de l'étape E305), il retourne à l'étape E301 et réitère les étapes décrites ci-dessus.

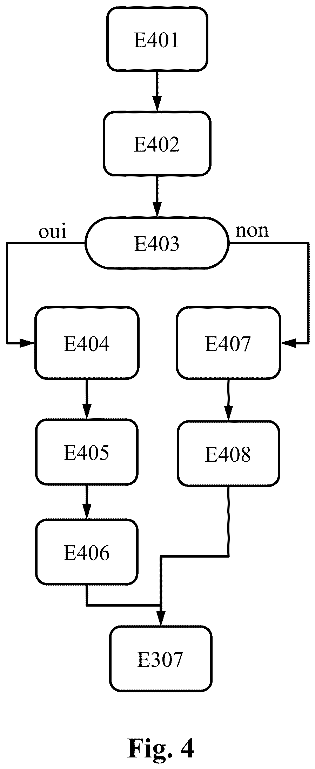

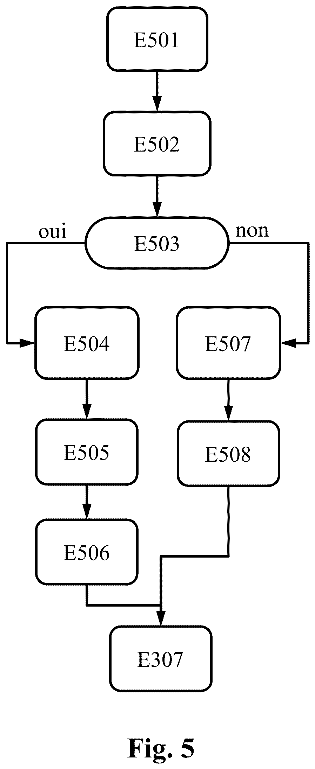

Au cours de l'étape E306, le dispositif de gestion 200 détermine, pour une partie des points de raccordement d'un groupe de points de raccordement alimenté par la même phase d'entrée L1', L2', L3', une modification de raccordement de phase à effectuer pour les points de raccordement sélectionnés (voir **Fig. 4** et **Fig. 5****).** Ensuite, le dispositif de gestion 200 exécute cette modification de raccordement de phase au cours d'une étape E307.

Cette modification de raccordement de phase correspond à une permutation de phases d'entrée pour un point de raccordement considéré. Par exemple, pour un point de raccordement monophasé, la modification de raccordement de phase consiste en la permutation d'une phase d'entrée initiale avec une nouvelle phase d'entrée. Dans un autre exemple, pour un point de raccordement polyphasé, la modification de raccordement de phase consiste en la modification de l'ordre des phases auxquelles sont connectées les phases de sortie du point de raccordement polyphasé.

Il est ainsi possible de passer d'une configuration de phase initiale (i.e., manière dont les phases d'entrée sont attribuées et réparties au niveau du point de raccordement) à une nouvelle configuration de phase permettant de rééquilibrer la charge de chaque phase d'entrée du réseau électrique 1032.

Selon un mode de réalisation, il est possible de définir des points de raccordement dont la configuration de phase ne peut être modifiée. Par exemple, le dispositif de gestion 200 a en mémoire une liste de points de raccordement (e.g., identifiés à partir d'un identifiant de compteur électrique équipant ledit point de raccordement) dont la configuration de phase ne peut être modifiée. Les points de raccordement dont la configuration de phase ne peut être modifiée sont, par exemple, des points de raccordement dont il a été défini (e.g., par l'abonné ou le fournisseur d'électricité) que la configuration de phase ne sera pas modifiable ou des points de raccordement qui ne sont pas équipés d'un dispositif adéquat pour permettre la permutation des phases d'entrée.

Dans un exemple d'effectuer la modification de raccordement de phase et ainsi mettre en place la (ou les) nouvelle(s) configuration(s) de phase (étape E307), le dispositif de gestion 200 transmet à un dispositif adéquat intégré dans le compteur électrique équipant le point de raccordement considéré, ou placé dans un boîtier approprié en amont du compteur électrique équipant le point de raccordement considéré, une demande de modification de raccordement de phase pour basculer, le cas échéant, d'un raccordement à une phase d'entrée à laquelle est initialement connectée une phase de sortie du point de raccordement considéré à un raccordement de ladite phase de sortie à une nouvelle phase d'entrée. Ce dispositif adéquat est alors apte à configurer matériellement chacune des phases d'entrée sur une phase de sortie ou de ne pas prendre en compte la nouvelle phase d'entrée (e.g., cas où il n'y a aucune tension dans la nouvelle phase d'entrée).

La demande de modification de raccordement de phase comprend notamment les modifications de raccordement de phase (i.e., permutation de phases d'entrée ou modifications de l'ordre des phases d'entrée) à effectuer. Par exemple, dans le cas d'un point de raccordement monophasé, la demande de modification de raccordement de phase indique que la phase d'entrée initialement raccordée au point de raccordement doit être déconnectée et qu'une nouvelle phase d'entrée (dont l'identité est fournie dans la demande) doit être connectée au point de raccordement.

Selon un mode de réalisation, le procédé de gestion décrit ci-dessus est répété de manière régulière, avec une périodicité programmable, définie par les cas d'utilisation : 2 fois par jour (heures creuses, heures pleines), 1 fois par jour, 1 fois par semaine, 2 fois par mois, 1 fois par mois...

La Fig. 4 illustre schématiquement certaines étapes du procédé de gestion décrit précédemment, selon un mode de réalisation. En particulier, la Fig. 4 détaille l'étape E306 de détermination d'une modification de raccordement de phase à effectuer, selon un premier mode de réalisation.

Au cours d'une étape E401, afin de déterminer quelle(s) modification(s) de raccordement de phase est (sont) à effectuer, et pour quel(s) point de raccordement alimenté(s) par le sous-répartiteur 102 considéré, le dispositif de gestion 200 classe les phases d'entrée L1', L2', L3' du sous-répartiteur 102.

Pour cela, selon un mode de réalisation, le dispositif de gestion 200 classe les phases d'entrée L1', L2', L3' dans un ordre décroissant de part de consommation globale prévisionnelle. Par exemple, si la part de consommation globale prévisionnelle de la première phase d'entrée L1' est de 10%, celle de la deuxième phase d'entrée L2' est de 50% et celle de la troisième phase L3' est de 40, alors la deuxième phase d'entrée L2' est supérieure à la troisième phase L3' qui est supérieure à la première phase d'entrée L1' (L2' > L3' > L1') en termes de part de consommation globale prévisionnelle.

Autrement dit, à l'issue de cette étape E401, le dispositif de gestion 200 a déterminé quelles sont les phases d'entrée ayant une consommation totale prévue sur une période prédéterminée la plus élevée (e.g., la deuxième phase d'entrée L2'), respectivement intermédiaire (e.g., la deuxième phase d'entrée L3'), respectivement la plus faible (e.g., la deuxième phase d'entrée L1'), parmi les phases d'entrée L1', L2', L3'.

Ensuite, au cours d'une étape E402, le dispositif de gestion 200 classe dans un ordre décroissant de consommations électriques moyennes prévues sur une période prédéterminée les points de raccordement alimentés initialement par la phase d'entrée ayant la part de consommation globale prévisionnelle la plus élevée (e.g., les points de raccordement alimentés initialement par la deuxième phase d'entrée L2'). Afin d'avoir des charges équilibrées sur l'ensemble des phases d'entrée L1', L2', L3', il faut diminuer la part de consommation globale prévisionnelle de la phase d'entrée ayant la part de consommation globale prévisionnelle la plus élevée pour l'amener à environ 33,33% de ladite consommation globale prévisionnelle. Cela correspond à un premier gain de consommation en électricité noté Y2 (en kWh). Par exemple, la part de consommation globale prévue de la deuxième phase d'entrée L2' est de 50%, alors il faut diminuer la part de consommation globale prévue de la deuxième phase d'entrée L2' d'environ 16.67%.

Le dispositif de gestion 200 sélectionne ensuite, dans l'ordre décroissant des consommations moyennes prévues sur la période prédéterminée, les points de raccordement dont une consommation moyenne totale prévue sur la période prédéterminée est égale au premier gain de consommation Y2 (en kWh).

Au cours d'une étape E403, le dispositif de gestion 200 détermine si la part de consommation globale prévue sur la période prédéterminée de la phase d'entrée ayant la part de consommation globale prévisionnelle intermédiaire entre la part de consommation globale la plus élevée et la plus faible (e.g., troisième phase d'entrée L3') est supérieure à un seuil S de 33.33%.

Si la part de consommation globale prévisionnelle intermédiaire est supérieure à 33.33% (réponse « oui » à l'issue de l'étape E403), alors le dispositif de gestion 200 décide de basculer les points de raccordement sélectionnés au cours de l'étape E402 de la phase d'entrée ayant la part de consommation globale prévisionnelle la plus élevée (e.g., deuxième phase d'entrée L2') sur la phase d'entrée ayant la part de consommation globale prévisionnelle la plus faible (e.g., première phase d'entrée L1'). Ainsi, les points de raccordement sélectionnés en étape E402 sont raccordés à une nouvelle phase d'entrée (e.g., première phase d'entrée L1'), diminuant ainsi la charge de la phase d'entrée à laquelle ils étaient initialement raccordés.

Puis, au cours d'une étape E405, le dispositif de gestion 200 sélectionne ensuite, dans l'ordre décroissant des consommations moyennes prévues sur la période prédéterminée, les points de raccordement alimentés initialement par la phase d'entrée ayant la part de consommation globale prévisionnelle intermédiaire (e.g., les points de raccordement alimentés initialement par la troisième phase d'entrée L3') dont une consommation moyenne totale prévue sur la période prédéterminée est égale à un deuxième gain de consommation Y3 (en kWh). En effet, afin d'avoir des charges équilibrées sur l'ensemble des phases d'entrée L1', L2', L3', il faut diminuer la part de consommation globale prévisionnelle de la phase d'entrée ayant la part de consommation globale prévisionnelle intermédiaire pour l'amener à environ 33,33% de ladite consommation globale prévisionnelle. Cela correspond à un deuxième gain de consommation noté Y3 (en kWh). Par exemple, la part de consommation globale prévisionnelle de la troisième phase d'entrée L3' est de 40%, alors il faut diminuer la part de consommation globale prévisionnelle de la troisième phase d'entrée L3' d'environ 6.67%.

Puis, au cours d'une étape E406, le dispositif de gestion 200 décide de basculer les points de raccordement sélectionnés au cours de l'étape E405 de la phase d'entrée ayant la part de consommation globale prévisionnelle intermédiaire (e.g., troisième phase d'entrée L3') sur la phase d'entrée ayant la part de consommation globale prévisionnelle la plus faible (e.g., première phase d'entrée L1'). Le dispositif de gestion 200 exécute ensuite l'étape E307 décrite ci-dessus. En particulier, le dispositif de gestion 200 transmet au(x) point(s) de raccordement concerné(s) la demande de modification de raccordement de phase avec la nouvelle configuration à mettre en place.

Au contraire, si la part de consommation globale prévisionnelle intermédiaire est inférieure ou égale à 33.33% (réponse « non » à l'issue de l'étape E403), alors le dispositif de gestion 200 sélectionne (étape E407) dans l'ordre décroissant des consommations moyennes prévues sur la période prédéterminée, des points de raccordements sélectionnés au cours de l'étape E402 jusqu'à obtenir un troisième gain de consommation noté Y1 (en kWh). Le dispositif de gestion 200 décide ensuite de commuter ces points de raccordement sélectionnés au cours de l'étape E402 et au cours de l'étape E407 vers la phase d'entrée ayant la part de consommation globale prévisionnelle la plus faible (e.g., première phase d'entrée L1'). Le troisième gain de consommation Y1 correspond à la différence entre 33.33% et la part (en pourcentage) de la consommation globale prévisionnelle de la phase d'entrée ayant la part de consommation globale prévisionnelle la plus faible.

Puis, au cours d'une étape E408, le dispositif de gestion 200 sélectionne dans l'ordre décroissant des consommations moyennes prévues sur la période prédéterminée, les points de raccordements sélectionnés au cours de l'étape E402 restants (i.e., n'ayant pas été sélectionnés au cours de l'étape E407), et décide ensuite de commuter ces points de raccordement sélectionnés au cours de l'étape E402 restants vers la phase d'entrée ayant la part de consommation globale prévisionnelle intermédiaire (e.g., troisième phase d'entrée L3'). Le dispositif de gestion 200 exécute ensuite l'étape E307 décrite ci-dessus.

Selon le mode de réalisation décrit ci-dessus, ce sont les points de raccordement dont la consommation prévue sur la période prédéterminée est la plus élevée, qui voient leur raccordement basculer d'un raccordement à une ou des phases d'entrée initiales vers une ou des nouvelles phases d'entrée.

La **Fig. 5** illustre schématiquement certaines étapes du procédé de gestion décrit précédemment, selon un autre mode de réalisation. En particulier, la **Fig. 5** détaille l'étape E306 de détermination d'une modification de raccordement de phase à effectuer, selon un deuxième mode de réalisation.

Comme décrit précédemment en lien avec l'étape E401, le dispositif de gestion 200 classe (étape E501) dans un ordre décroissant de part de consommation globale prévue sur une période prédéterminée, les phases d'entrée L1', L2', L3'.

Ensuite, au cours d'une étape E502, le dispositif de gestion 200 sélectionne aléatoirement des points de raccordement alimentés initialement par la phase d'entrée ayant la part de consommation globale prévisionnelle la plus élevée (e.g., les points de raccordement alimentés initialement par la deuxième phase d'entrée L2') dont une consommation moyenne totale prévue sur une période prédéterminée est égale au premier gain de consommation Y2 (en kWh) décrit précédemment.

Au cours d'une étape E503, similaire à l'étape E403, le dispositif de gestion 200 détermine si la part de consommation globale prévisionnelle de la phase d'entrée ayant une part de consommation globale prévisionnelle intermédiaire entre la part de consommation globale prévisionnelle la plus élevée et la plus faible (e.g., troisième phase d'entrée L3') est supérieure ou égale au seuil S de 33.33%.

Si la part de consommation globale prévisionnelle intermédiaire est supérieure à 33.33% (réponse « oui » à l'issue de l'étape E503), alors le dispositif de gestion 200 décide de commuter les points de raccordement sélectionnés au cours de l'étape E502 de la phase d'entrée ayant la part de consommation globale prévisionnelle la plus élevée (e.g., deuxième phase d'entrée L2') vers la phase d'entrée ayant la part de consommation globale prévisionnelle la plus faible (e.g., première phase d'entrée L1').

Puis, au cours d'une étape E505, le dispositif de gestion 200 sélectionne ensuite, aléatoirement, les points de raccordement alimentés initialement par la phase d'entrée ayant la part de consommation globale prévisionnelle intermédiaire (e.g., les points de raccordement alimentés initialement par la troisième phase d'entrée L3') dont une consommation moyenne totale prévue sur la période prédéterminée, est égale au deuxième gain de consommation Y3 (en kWh) tel que décrit précédemment. Puis, au cours d'une étape E506, le dispositif de gestion 200 décide de commuter les points de raccordement sélectionnés au cours de l'étape E505 de la phase d'entrée ayant la part de consommation globale prévisionnelle intermédiaire (e.g., troisième phase d'entrée L3') vers la phase d'entrée ayant la part de consommation globale prévisionnelle la plus faible (e.g., première phase d'entrée L1'). Le dispositif de gestion 200 exécute ensuite l'étape E307 décrite ci-dessus.

Au contraire, si la part de consommation globale prévisionnelle intermédiaire est inférieure ou égale à 33.33% (réponse « non » à l'issue de l'étape E503), alors le dispositif de gestion 200 sélectionne aléatoirement des points de raccordements sélectionnés au cours de l'étape E502 jusqu'à obtenir le troisième gain de consommation noté Y1 (en kWh) tel que décrit précédemment. Le dispositif de gestion 200 décide ensuite de basculer ces points de raccordement sélectionnés au cours de l'étape E502 et de l'étape E507, vers la phase d'entrée ayant la part de consommation globale prévisionnelle la plus faible (e.g., première phase d'entrée L1').

Puis, au cours d'une étape E508, le dispositif de gestion 200 sélectionne les points de raccordements sélectionnés au cours de l'étape E502 restants (i.e., n'ayant pas été sélectionnés au cours de l'étape E507), et décide ensuite de basculer ces points de raccordement sélectionnés au cours de l'étape E502 restants vers la phase d'entrée ayant la part de consommation globale prévisionnelle intermédiaire (e.g., troisième phase d'entrée L3'). Le dispositif de gestion 200 exécute ensuite l'étape E307 décrite ci-dessus.

Selon le mode de réalisation décrit ci-dessus, il n'est pas nécessaire de toujours sélectionner les points de raccordement à la consommation prévue sur la période prédéterminée la plus élevée. Ainsi, davantage de points de raccordement peuvent être choisis, car ceux retenus ne sont pas systématiquement les plus gros consommateurs d'électricité.

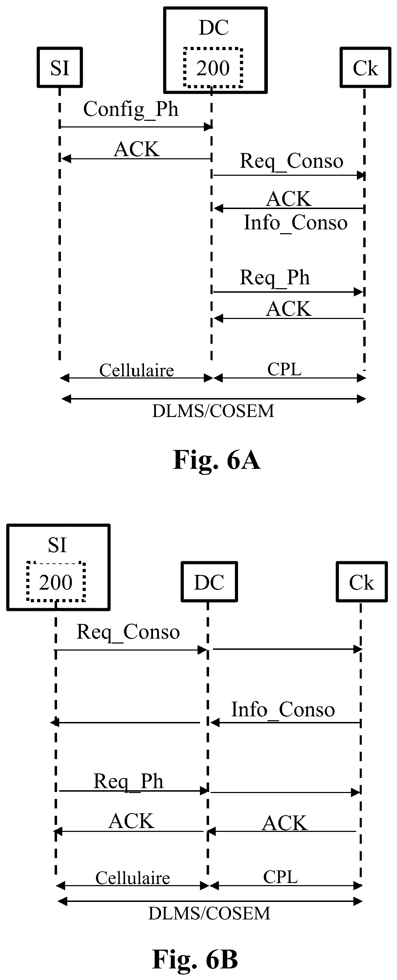

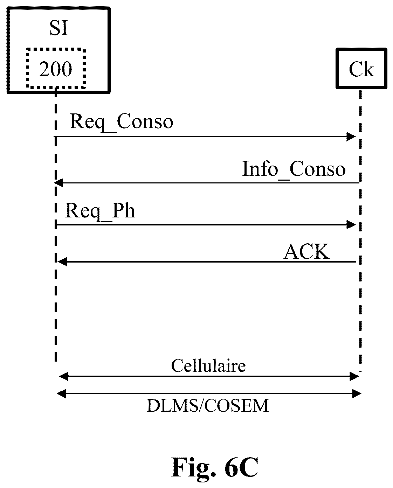

Les **Fig. 6A, Fig. 6B** et **Fig. 6C** illustrent sous forme de diagramme de flux des exemples de flux de communication au cours du procédé de gestion tel que décrit précédemment.

A titre illustratif, il est considéré que le dispositif adéquat (i.e., permettant la permutation des phases d'entrée) décrit précédemment est intégré dans un compteur électrique.

Selon un mode de réalisation, dont un exemple est illustré en **Fig. 6A****,** le dispositif de gestion 200 est intégré au concentrateur de données DC. Comme décrit précédemment, le système d'information SI transmet au concentrateur de données DC, *via* le premier réseau de communication 101, les données topologiques dont les données de configuration de phase (Config_Ph). En retour, le concentrateur de données DC transmet un message de confirmation de réception des données (ACK). Le concentrateur de données DC transmet alors à chaque compteur Ck une demande (Req_Conso) des données de consommation d'énergie électrique pour la, ou des phases d'entrée à laquelle, ou auxquelles, sont connectées la, ou les phases de sortie du point de raccordement, *via* le deuxième réseau de communication. Les compteurs Ck transmettent en retour les données de consommation d'énergie électrique (Info_Conso), ainsi qu'une confirmation de réception des données (ACK). Le concentrateur de données DC met ensuite en œuvre le procédé de gestion d'équilibrage tel que décrit ci-dessus, *via* le dispositif de gestion de l'équilibrage 200. Le concentrateur de données DC transmet ensuite aux compteurs électriques Ck une demande de modification de raccordement de phase (Req_Ph) pour permuter un raccordement d'une ou plusieurs phases d'entrée à laquelle, ou auxquelles, est (sont) initialement connectée(s) une ou des phases de sortie d'un point de raccordement, avec un raccordement de ladite ou desdites phases de sortie à une ou des nouvelles phases d'entrée.

Selon un autre mode de réalisation, dont un exemple est illustré en **Fig. 6B****,** le dispositif de gestion 200 est intégré au système d'information SI. Comme décrit précédemment, le système d'information SI possède déjà les données topologiques dont les données de configuration de phase. Le système d'information SI transmet alors à chaque compteur Ck une demande (Req_Conso) des données de consommation d'énergie électrique pour la, ou des phases d'entrée à laquelle, ou auxquelles, sont connectées la, ou les phases de sortie du point de raccordement, *via* le concentrateur de données DC. Les compteurs Ck transmettent en retour les données de consommation d'énergie électrique (Info_Conso) au système d'information SI *via* le concentrateur de données DC. Le système d'information SI met ensuite en œuvre le procédé de gestion d'équilibrage tel que décrit ci-dessus, *via* le dispositif de gestion de l'équilibrage 200. Le système d'information SI transmet ensuite aux compteurs électriques Ck une demande de modification de raccordement de phase (Req_Ph) pour permuter un raccordement d'une ou des phases à laquelle, ou auxquelles sont initialement connectées une, ou des phases de sortie du point de raccordement, avec un raccordement de ladite, ou desdites phases de sortie à une, ou des nouvelles phases.

Selon un autre mode de réalisation, dont un exemple est illustré en **Fig. 6C****,** le dispositif de gestion 200 est intégré au système d'information SI. Contrairement à l'exemple de la **Fig. 6B****,** le système d'information SI communique directement avec les compteurs Ck *via* un réseau de communication 104.

Selon un mode de réalisation, le système d'information SI, le concentrateur de données DC et les compteurs C1 à Ck échangent des informations et des données *via* le protocole DLMS/COSEM.

Par exemple, un objet DLMS / COSEM : « *Aiguillage Phases* » est créé pour permettre de modifier les phases de raccordement des points de raccordement, qu'ils soient monophasés ou polyphasés. Les attributs de cette nouvelle commande DLMS sont (cas d'un réseau triphasé avec un point de raccordement triphasé) :
- connexion Phase d'entrée 1 sur aucune phase de sortie abonné ou sur phase de sortie 1, 2 ou 3 ;
- connexion Phase d'entrée 2 sur aucune phase de sortie abonné ou sur phase de sortie 1, 2 ou 3 ;
- connexion Phase d'entrée 3 sur aucune phase de sortie abonné ou sur phase de sortie 1, 2 ou 3.

Cet objet gère bien entendu les cas interdits :
- dans le cas monophasé, seule la connexion à la phase de sortie est autorisée et seule une phase d'entrée peut être connectée sur la sortie à la fois,
- dans le cas polyphasé, il est interdit de connecter plusieurs phases d'entrées sur une même phase de sortie ou plusieurs phases de sorties sur une même phase d'entrée.

## Revendications

1. Procédé de gestion de l'équilibrage des charges d'un réseau électrique (1032) comprenant une pluralité de phases (L1', L2', L3') alimentant en énergie électrique un ensemble de points de raccordement adaptés pour raccorder une installation électrique d'un abonné audit réseau électrique (1032), **caractérisé en ce que** ledit procédé est implémenté dans un dispositif de gestion (200), **et en ce que** ledit procédé comprend :
- obtenir (E301), pour chaque point de raccordement, des premières données représentatives d'au moins une phase parmi ladite pluralité de phases à laquelle est connecté chaque point de raccordement,
- obtenir (E302), pour chaque point de raccordement, des deuxième données représentatives d'une consommation d'énergie électrique sur une période prédéterminée pour ladite au moins une phase à laquelle ledit point de raccordement est connecté,
- estimer (E302, 303), en fonction des premières données et d'une consommation moyenne déterminée sur la base desdites deuxièmes données, une consommation d'énergie électrique totale prévue sur une période prédéterminée pour chaque phase (L1', L2', L3') de ladite pluralité de phases,
- détecter (E305) un déséquilibre de charge entre lesdites phases (L1', L2', L3') à partir de ladite consommation d'énergie électrique totale prévue,
- et lorsqu'un déséquilibre de charge est détecté, alors commander (E306, E307) une modification de raccordement de phase, ladite modification de raccordement de phase comprenant:
- classer par ordre décroissant de consommation d'énergie électrique totale prévue sur la période prédéterminée, lesdites phases (L1', L2', L3') de ladite pluralité de phases (L1', L2', L3'), une première phase étant une phase ayant une consommation d'énergie électrique totale prévue la plus élevée, une deuxième phase étant une phase ayant une consommation d'énergie électrique totale prévue intermédiaire, une troisième phase étant une phase ayant une consommation d'énergie électrique totale prévue la plus faible ;
- pour ladite première phase, sélectionner, un premier ensemble de points de raccordement sélectionnés parmi un groupe de points de raccordement alimentés par ladite première phase, jusqu'à ce qu'une consommation d'énergie électrique totale prévue sur la période prédéterminée des points de raccordement atteigne un premier gain de consommation prédéterminé (Y2).

2. Procédé selon la revendication 1, **caractérisé en ce que** détecter un déséquilibre de charge entre lesdites phases (L1', L2', L3') comprend :
- déterminer, à partir de ladite consommation d'énergie électrique totale prévue de chaque phase (L1', L2', L3'), les phases ayant une consommation d'énergie électrique totale prévue sur la période prédéterminée la plus élevée, respectivement la plus faible, et
- si une différence de consommation d'énergie électrique totale prévue entre les phases ayant une consommation d'énergie électrique totale prévue la plus élevée et la plus faible est supérieure à un seuil prédéterminé, alors ledit déséquilibre de charge est détecté.

3. Procédé selon l'une quelconque des revendications 1 et 2, **caractérisé en ce que** sélectionner (E402), pour ladite première phase, ledit premier ensemble de points de raccordement est effectué
dans un ordre décroissant de consommation moyenne d'énergie électrique prévue sur la période prédéterminée, et commander ladite modification de raccordement de phase comprend en outre :
- si (E403) une consommation d'énergie électrique totale prévue de ladite deuxième phase est supérieure à un seuil (S) prédéterminé, alors :
- commander un basculement (E404) des points de raccordement dudit premier ensemble sélectionné sur un raccordement à ladite troisième phase, et
- sélectionner (E405), dans un ordre décroissant d'une consommation moyenne d'énergie électrique prévue sur la période prédéterminée, un deuxième ensemble de points de raccordement sélectionnés parmi un groupe de points de raccordement alimentés par ladite deuxième phase, jusqu'à ce qu'une consommation d'énergie électrique totale prévue sur la période prédéterminée des points de raccordement atteigne un deuxième gain de consommation prédéterminé (Y3), et commander un basculement (E406) des points de raccordement dudit deuxième ensemble sélectionné sur un raccordement à ladite troisième phase.

4. Procédé selon la revendication 3, **caractérisé en ce que** commander ladite modification de raccordement de phase comprend en outre :
- lorsque la consommation d'énergie électrique totale prévue de ladite deuxième phase est inférieure ou égale au seuil (S) prédéterminé, alors,
- sélectionner (E407), dans un ordre décroissant d'une consommation moyenne d'énergie électrique prévue sur la période prédéterminée, un troisième ensemble de points de raccordement sélectionnés parmi les points de raccordement dudit premier ensemble, jusqu'à ce qu'une consommation d'énergie électrique totale prévue sur la période prédéterminée des points de raccordement atteigne un troisième gain de consommation prédéterminé (Y1), et commander un basculement des points de raccordement dudit troisième ensemble sur un raccordement à ladite troisième phase, et
- sélectionner (E408), dans un ordre décroissant d'une consommation moyenne d'énergie électrique prévue sur la période prédéterminée, les points de raccordement restants dudit premier ensemble et commander un basculement des points de raccordement restants dudit premier ensemble sur un raccordement à ladite deuxième phase.

5. Procédé selon l'une quelconque des revendications 1 et 2, **caractérisé en ce que** sélectionner (E502), pour ladite première phase, ledit premier ensemble de points de raccordement est effectué aléatoirement, et commander ladite modification de raccordement de phase comprend en outre :
- si (E503) une consommation d'énergie électrique totale prévue de ladite deuxième phase est supérieure à un seuil (S) prédéterminé, alors :
- commander un basculement (E504) des points de raccordement dudit premier ensemble sélectionnés sur un raccordement à ladite troisième phase, et
- sélectionner (E505), aléatoirement, un deuxième ensemble de points de raccordement sélectionnés parmi un groupe de points de raccordement alimentés par ladite deuxième phase, jusqu'à ce qu'une consommation d'énergie électrique totale prévue sur la période prédéterminée des points de raccordement atteigne un deuxième gain de consommation prédéterminé (Y3), et commander un basculement (E506) des points de raccordement dudit deuxième ensemble sélectionné sur un raccordement à ladite troisième phase.

6. Procédé selon la revendication 5, **caractérisé en ce que** commander ladite modification de raccordement de phase comprend en outre :
- lorsque la consommation d'énergie électrique totale prévue de ladite deuxième phase est inférieure ou égale au seuil (S) prédéterminé, alors,
- sélectionner (E507), aléatoirement, un troisième ensemble de points de raccordement sélectionnés parmi ledit premier ensemble jusqu'à ce qu'une consommation d'énergie électrique totale prévue sur la période prédéterminée des points de raccordement atteigne un troisième gain de consommation prédéterminé (Y1), et commander un basculement les points de raccordement dudit troisième ensemble sur un raccordement à ladite troisième phase, et
- sélectionner (508) les points de raccordement restants dudit premier ensemble et commander un basculement les points de raccordement restants dudit premier ensemble sur un raccordement à ladite deuxième phase.

7. Dispositif de gestion (200) de l'équilibrage des charges d'un réseau électrique (1032) comprenant une pluralité de phases (L1', L2', L3') alimentant en énergie électrique un ensemble de points de raccordement adaptés pour raccorder une installation électrique d'un abonné audit réseau électrique (1032), **caractérisé en ce que** ledit dispositif de gestion (200) comprend de la circuiterie électronique configurée pour :
- obtenir (E301), pour chaque point de raccordement, des premières données représentatives d'au moins une phase parmi ladite pluralité de phases à laquelle est connecté chaque point de raccordement,
- obtenir (E302), pour chaque point de raccordement, des deuxièmes données représentatives d'une consommation d'énergie électrique sur une période prédéterminée pour ladite au moins une phase à laquelle ledit point de raccordement est connecté,
- estimer (E302), en fonction des premières données et d'une consommation moyenne déterminée sur la base desdites deuxièmes données, une consommation d'énergie électrique totale prévue sur une période prédéterminée pour chaque phase (L1', L2', L3') de ladite pluralité de phases,
- détecter (E305) un déséquilibre de charge entre lesdites phases (L1', L2', L3') à partir de ladite consommation d'énergie électrique totale prévue,
- et lorsqu'un déséquilibre de charge est détecté, alors commander (E306, E307) une modification de raccordement de phase, ladite modification de raccordement de phase comprenant :
- classer par ordre décroissant de consommation d'énergie électrique totale prévue sur la période prédéterminée, lesdites phases (L1', L2', L3') de ladite pluralité de phases (L1', L2', L3'), une première phase étant une phase ayant une consommation d'énergie électrique totale prévue la plus élevée, une deuxième phase étant une phase ayant une consommation d'énergie électrique totale prévue intermédiaire, une troisième phase étant une phase ayant une consommation d'énergie électrique totale prévue la plus faible ;
- pour ladite première phase, sélectionner, un premier ensemble de points de raccordement sélectionnés parmi un groupe de points de raccordement alimentés par ladite première phase, jusqu'à ce qu'une consommation d'énergie électrique totale prévue sur la période prédéterminée des points de raccordement atteigne un premier gain de consommation prédéterminé (Y2).

8. Dispositif de gestion (200) selon la revendication 7, **caractérisé en ce qu'**il est intégré à un système d'information (SI) d'un fournisseur d'électricité.

9. Dispositif de gestion (200) selon la revendication 7, **caractérisé en qu**'il est intégré dans un concentrateur de données.

10. Produit programme d'ordinateur, comportant des instructions entraînant l'exécution, par un processeur, du procédé selon l'une quelconque des revendications 1 à 6, lorsque lesdites instructions sont exécutées par le processeur.

11. Support de stockage, stockant un programme d'ordinateur comportant des instructions entraînant l'exécution, par un processeur, du procédé selon l'une quelconque des revendications 1 à 6, lorsque lesdites instructions sont lues depuis le support de stockage et exécutées par le processeur.
